Europäisches Patentamt

**European Patent Office**

**Office européen des brevets**

(11) Numéro de publication: **0 242 556**
**B1**

---

(12) **FASCICULE DE BREVET EUROPÉEN**

---

(45) Date de publication du fascicule du brevet:
21.03.90

(21) Numéro de dépôt: **87103353.6**

(22) Date de dépôt: **09.03.87**

(51) Int. Cl. ⁵: **A 47 J 31/40, A 47 J 31/06**

---

(54) **Dispositif d'extraction de cartouches.**

---

(30) Priorité: **24.04.86 CH 1668/86**

(43) Date de publication de la demande:
**28.10.87 Bulletin 87/44**

(45) Mention de la délivrance du brevet:
**21.03.90 Bulletin 90/12**

(84) Etats contractants désignés:
**AT BE CH DE ES FR GB IT LI LU NL SE**

(56) Documents cité:
**CH-A-406 561**
**DE-U-7 430 109**
**FR-A-2 373 999**
**US-A-2 778 739**
**US-A-3 295 998**

(73) Titulaire: **SOCIETE DES PRODUITS NESTLE S.A.**
**Case postale 353**
**CH-1800 Vevey (CH)**

(72) Inventeur: **Favre, Eric**
**La Cadette**
**CH-1041 Saint-Barthelemy (CH)**
Inventeur: **Masek, Petr**
**Rue d'Entremonts 24**
**CH-1400 Yverdon (CH)**

---

LIBERGRAF, STOCKHOLM 1990

## Description

L'invention concerne un dispositif pour la confection de boisson par extraction d'une cartouches disposée dans un porte-cartouches, pour machine à café conforme au préambule de la revendication 1.

Un tel dispositif est connu du CH-A-605 293. Dans ce dispositif connu aucun moyen n'est prévu pour opérer en fin d'extraction le dégagement de la cartouche du corps cylindrique creux.

Le but de la présente invention est de prévoir un dispositif du type précité pourvu de tels moyens.

Selon l'invention ce but est atteint dans un dispositif du type précité présentant les caractéristiques figurant dans la partie caractérisante de la revendication 1.

L'organe d'injection est prévu pour percer directement la cartouche lors de sa mise en place sur la machine à café, la pompe à eau amenant alors à travers le dispositif de chauffage d'eau, la quantité d'eau nécessaire pour le mouillage sur ledit organe d'injection.

Le nombre de trous prévu sur cet organe d'injection est de préférence compris entre un et six, plus particulièrement deux trous diamétralement opposés. L'axe de ces trous fait un angle compris entre 70 et 80° avec l'axe du cylindre. Cette disposition est utile pour permettre une bonne diffusion de l'eau dans toute la masse du café de la cartouche, de manière à atteindre une extraction complète et à éviter la formation de canaux dans le café moulu. Pour ouvrir la cartouche, l'organe d'injection doit être pointu, l'angle de la pointe est de préférence compris entre 20 et 40° pour ne pas abimer le dôme supérieur de la cartouche.

Les trous de l'organe d'injection sont de dimension bien définie. En effet, il faut qu'ils soient suffisamment larges pour permettre une bonne arrivée de l'eau sous une pression pouvant aller jusqu'à 15 bars et pas trop gros cependant pour éviter tout risque de reflux du marc en fin d'extraction. Ces trous ont un diamètre compris entre 0,2 et 1 mm, de préférence un diamètre de 0,6 ou 0,8 mm. A l'extérieur du corps cylindrique du dispositif d'extraction, il est prévu un ressort à spirales et la bague de dégagement de la cartouche est de préférence en matière plastique, compatible dans le domaine alimentaire.

Le dispositif d'extraction selon l'invention comprend en outre un porte-cartouches ayant une forme intérieure cylindrique avec une arête annulaire coopérant avec la partie inférieure du corps cylindrique. Pour que lors de la confection du café, la mousse ne soit pas cassée et le jet soit bien vertical, on prévoit sur le porte-cartouches un système pour couper le jet et une ouverture pour l'entrée d'air.

La suite de la description est faite en référence aux dessins sur lesquels,

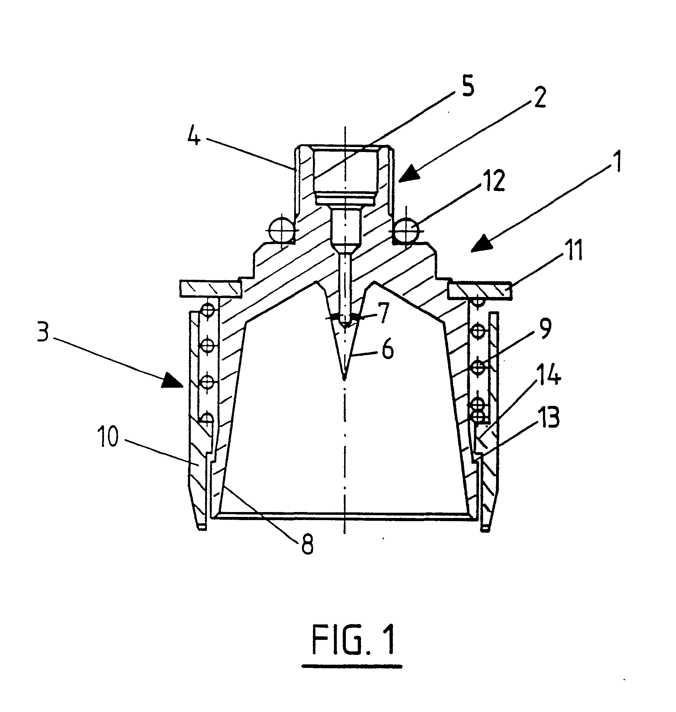

Fig. 1 est une coupe axiale du dispositif d'extraction selon l'invention et

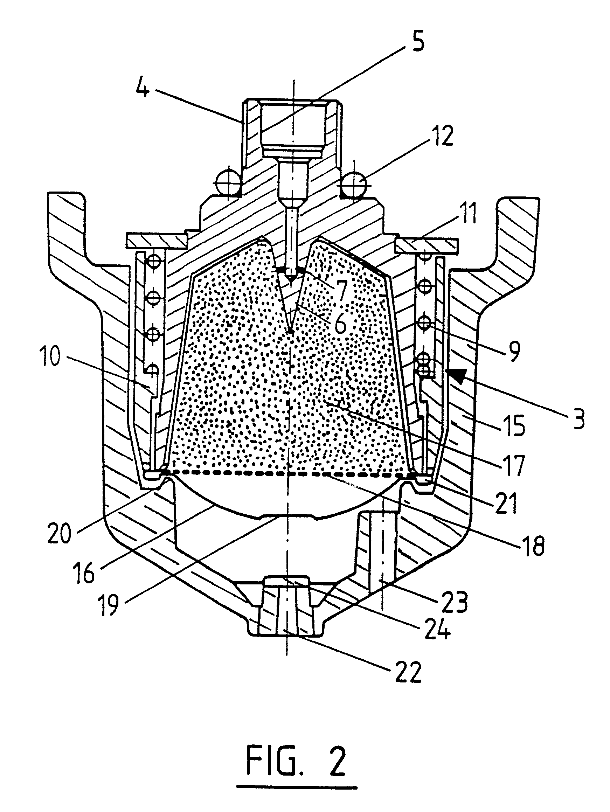

Fig. 2 est une coupe identique montrant le dispositif d'extraction en fonctionnement.

Le dispositif d'extraction (1) comporte une partie supérieure (2) avec filetage (4) et joint d'étanchéité (12) pour être vissée sur la sortie eau d'une machine à café et un corps cylindrique creux (3). L'eau arrive par l'alésage (5) sur l'organe d'injection (6) comportant deux trous (7). Le corps (3) a une forme intérieure (8) et comporte sur sa partie extérieure un ressort à spirales (9) maintenant une bague (10) pour dégager les cartouches en fin d'extraction. La bague (10) est limitée dans son mouvement d'une part par la partie annulaire (11) (ressort (9) comprimé) et d'autre part par la butée (13) coopérant avec un ergot annulaire (14) de la bague (10) (ressort détendu). Pour l'extraction, on opère de la manière suivante: on dispose dans le porte-cartouches (15) une cartouche (16), on place alors ledit porte-cartouches sous le dispositif d'extraction (1) selon l'invention, de manière à ce que l'organe d'injection (6) perce la cartouche. L'eau chaude arrive par les trous (7) sur le café moulu (17) sous une pression d'au moins 8 bars. En raison de cette pression élevée, il n'y a pas besoin de joint d'étanchéité au niveau de l'organe d'injection (6), l'eau restant bien dans la cartouche. L'arête annulaire (20) sur le porte-cartouches coopère avec l'extrémité inférieure du corps cylindrique creux (3), de manière à maintenir fermement la bordure (21) de la cartouche (16). Ce solide maintien de la bordure est indispensable, car le filtre (18) de la cartouche subit lors de l'extraction des pressions élevées. Sans ce maintien, le filtre serait déformé ou déchiré, ce qui conduirait à une mauvaise extraction de la cartouche et donc à un café espresso non acceptable. Ensuite l'opercule (19) de la cartouche éclate le long de sa ligne d'affaiblissement et on récupère par le canal (22) la boisson prête à l'usage. Le café s'écoule bien dans la tasse grâce au dispositif coupe jet (24) et à l'ouverture d'entrée d'air (23). On obtient avec ce dispositif une boisson espresso, aérée et onctueuse, dans laquelle on a récupéré même les arômes volatils pour une durée totale d'extraction de l'ordre d'une vingtaine de secondes.

En fin d'extraction, on dégage le porte-cartouches (15), la bague (10) poussant sous l'effet du ressort (9) la cartouche (16) de manière à ce qu'elle se dépose dans ledit porte-cartouches. Le système est alors prêt pour une nouvelle extraction.

## Revendications

1. Dispositif pour la confection de boisson par extraction d'une cartouche disposée dans un porte-cartouches pour machine à café, ledit dispositif étant adaptable sur la sortie d'eau de ladite machine et comprenant un corps cylindrique creux (3) ayant une forme intérieure épousant sensiblement la forme extérieure de la cartouche à extraire et comportant à sa partie supérieure suivant l'axe dudit cylindre un organe d'injection d'eau (6) dans la cartouche, caractérisé en ce qu'il comprend une partie annulaire (11) sur la partie supérieure du corps cylindrique (3), une butée (13) sur le bas et sur la partie extérieure du corps cylindrique, une bague (10) entourant le corps cylindrique (3) et présentant un ergot annulaire (14) tel que lorsque l'ergot appuie sur la butée (13), la bague dépasse du bas du corps cylindrique pour dégager la cartouche et un ressort (9) pour le déplacement de la bague (10) s'appuyant sur la partie annulaire (11) et l'ergot (14).

2. Dispositif selon la revendication 1, caractérisé en ce que l'organe d'injection (6) comporte entre 1 et 6 trous, de préférence 2.

3. Dispositif selon les revendications 1 et 2, caractérisé en ce que l'axe des trous (7) de l'organe d'injection (6) fait un angle compris entre 70 et 80° avec l'axe du cylindre.

4. Dispositif selon l'une des revendications 1 à 3, caractérisé en ce que l'organe d'injection (6) est un organe pointu d'angle compris entre 20 et 40°.

5. Dispositif selon l'une des revendications 1 à 4, caractérisé en ce que les trous (7) de l'organe d'injection ont un diamètre compris entre 0,2 et 1 mm.

6. Dispositif selon l'une des revendications 1 à 5, caractérisé en ce que le ressort (9) est un ressort à spirales et la bague (10) est en matière plastique.

7. Dispositif selon l'une des revendications 1 à 6, caractérisé en ce qu'il comprend en outre un porte-cartouches (15) ayant une forme intérieure cylindrique avec une arête annulaire (20) coopérant avec la partie inférieure du corps cylindrique (3).

8. Dispositif selon la revendication 7, caractérisé en ce que le porte-cartouches (15) comprend un système pour couper le jet (24) et une ouverture (23) pour l'entrée d'air.

## Patentansprüche

1. Vorrichtung zur Getränkeaufbereitung durch Aufbrühen einer Kapsel, die in einem Kapselträger für eine Kaffeemaschine angeordnet ist, wobei die Vorrichtung an den Wasserauslaß der Maschine anschließbar ist und einen zylindrischen Hohlkörper (3) aufweist, dessen Innenform der Außenform der aufzubrühenden Kapsel im wesentlichen angepaßt ist und der in seinem oberen Abschnitt auf der Zylinderachse ein Organ (6) zum Einspritzen von Wasser in die Kapsel aufweist, gekennzeichnet durch einen ringförmigen Teil (11) am oberen Abschnitt des zylindrischen Körpers (3), einen Anschlag (13) am unteren und äußeren Abschnitt des zylindrischen Körpers, einen Ring (10), welcher den zylindrischen Körper (3) umgibt und einen ringförmigen Ansatz (14) hat, derart, daß bei Anlage des Ansatzes am Anschlag (13) der Ring die Unterseite des zylindrischen Körpers überragt, um die Kapsel zu lösen, und eine Feder (9), die zur Bewegung des Ringes (10) am ringförmigen Teil (11) und am Ansatz (14) angreift.

2. Vorrichtung nach Anspruch 1, dadurch gekennzeichnet, daß das Einspritzorgan (6) zwischen 1 und 6 Löcher hat, vorzugsweise 2.

3. Vorrichtung nach den Ansprüchen 1 und 2, dadurch gekennzeichnet, daß die Achse der Löcher (7) des Einspritzorganes (6) einen Winkel zwischen 70 und 80° mit der Achse des Zylinders einschließt.

4. Vorrichtung nach einem der Ansprüche 1 bis 3, dadurch gekennzeichnet, daß das Einspritzorgan (6) ein unter einem Winkel zwischen 20 und 40° spitz zulaufendes Organ ist.

5. Vorrichtung nach einem der Ansprüche 1 bis 4, dadurch gekennzeichnet, daß die Löcher (7) des Einspritzorganes einen Durchmesser zwischen 0,2 und 1 mm haben.

6. Vorrichtung nach einem der Ansprüche 1 bis 5, dadurch gekennzeichnet, daß die Feder (9) eine Wendelfeder ist und der Ring (10) aus Kunststoff besteht.

7. Vorrichtung nach einem der Ansprüche 1 bis 6, dadurch gekennzeichnet, daß sie ferner einen Kapselträger (15) aufweist, der eine zylindrische Innenform hat, mit einem Anschlagring (20), der mit dem unteren Abschnitt des zylindrischen Körpers (3) zusammenwirkt.

8. Vorrichtung nach Anspruch 7, dadurch gekennzeichnet, daß der Kapselträger (15) ein System (24) zum Zerteilen des Strahles und eine Lufteintrittsöffnung (23) aufweist.

## Claims

1. A device for the preparation of a beverage by extraction of a cartridge disposed in a cartridge holder for coffee machines, said device being designed to be fitted onto the water outlet of the said machine and comprising a hollow cylindrical body (3) of which the inner form conforms closely to the outer form of the cartridge to be extracted and comprising a water injection element (6) in the cartridge at its upper part along the axis of said cylinder, characterized in that it comprises an annular part (11) on the upper part of the cylindrical body (3), a stop (13) on the lower and outer part of the cylindrical body, a ring (10) surrounding the cylindrical body (3) and comprising an annular lug (14) so that when the lug bears against the stop (13), the ring extends beyond the lower part of the cylindrical body for releasing the cartridge and a spring (9) for moving the ring (10), bearing against the annular part (11) and the lug (14).

2. A device as claimed in claim 1, characterized in that the injection element (6) comprises between 1 and 6 holes, preferably 2 holes.

3. A device as claimed in claims 1 and 2, characterized in that the axis of the holes (7) of the injection element (6) forms an angle of from 70 to 80° with the axis of the cylinder.

4. A device as claimed in any of claims 1 to 3, characterized in that the injection element (6) is a pointed element having an angle of from 20 to 40°.

5. A device as claimed in any of claims 1 to 4, characterized in that the holes (7) of the injection element are from 0.2 to 1 mm in diameter.

6. A device as claimed in any of claims 1 to 5, characterized in that the spring (9) is a helical spring and the ring (10) is made of a plastics material.

7. A device as claimed in any of claims 1 to 6, characterized in that it additionally comprises a cartridge holder (15) having a cylindrical inner form with an annular edge (20) co-operating with the lower part of the cylindrical body (3).

8. A device as claimed in claim 7, characterized in that the cartridge holder (15) comprises a system (24) for cutting off the jet and an air inlet opening (23).

FIG. 1

FIG. 2